# EUROPÄISCHE PATENTSCHRIFT

(11) **EP 4 565 846 B1**
(45) Veröffentlichungstag und Bekanntmachung des Hinweises auf die Patenterteilung: **25.02.2026**
(21) Anmeldenummer: 23768207.5
(22) Anmeldetag: 06.09.2023
(51) Int. Cl.: G01F 1/66, G01F 1/667, G01F 15/14

(54) **ULTRASCHALLMESSANORDNUNG**
ULTRASONIC MEASURING ARRANGEMENT
DISPOSITIF DE MESURE À ULTRASONS

(30) Priorität: 18.10.2022 DE 102022210971
(43) Veröffentlichungstag der Anmeldung: 11.06.2025
(73) Patentinhaber: MIB GmbH Messtechnik und Industrieberatung, 79206 Breisach (DE)
(72) Erfinder: DEUTSCHER, Martin, 79111 Freiburg (DE); WILL, Thomas, 79235 Vogtsburg (DE)
(74) Vertreter: Isarpatent
(86) Internationale Anmeldenummer: PCT/EP2023/074382
(87) Internationale Veröffentlichungsnummer: WO 2024/083397

(56) Entgegenhaltungen:
- DE-U1- 202013 101 798
- GB-A- 2 101 318
- US-A1- 2007 062 305
- US-A1- 2017 122 786
- US-A1- 2019 033 106

## Beschreibung

Die Erfindung betrifft eine Ultraschallmessanordnung zur Durchflussmessung an einem in einem Messrohr strömenden Medium, welches Messrohr in einem Gehäuse angeordnet ist, wobei an dem Messrohr wenigstens ein Ultraschallwandler angeordnet ist, mittels dessen Schallenergie in einer Richtung in das in dem Messrohr strömende Medium einkoppelbar und aus dem Messrohr ausgekoppelte Schallenergie erfassbar ist, die mit einer Längsachse des Messrohrs einen Winkel einschließt, wobei wenigstens ein Ultraschallwandler mit seinem Wandlerkörper in Gebrauchsstellung in wenigstens einer Aufnahme des Gehäuses aufgenommen ist und benachbart zu einem dem Messrohr zugewandten stirnseitigen Wandabschnitt der Aufnahme angeordnet ist. Gleichermaßen wird natürlich die Schallenergie anschließend aus dem Messrohr wieder ausgekoppelt und von dem dann als Empfänger fungierenden Ultraschallwandler erfasst.

Die Messung von Durchflüssen mittels gut durchschallbarer Messstrecken ist für fließfähige Medien bereits bekannt und kommt in verschiedenen Konzepten zur Anwendung. Eine Möglichkeit einen Durchfluss oder andere ein Medium in Form eines Fluids betreffende Messgrößen zu erfassen, wird durch Ultraschallwandler realisiert. Dieser wird genutzt, um Schallenergie in Form einer Ultraschallwelle in das durch das Messrohr strömende Fluid einzukoppeln, wobei diese auf einem geraden Weg oder nach mehreren Reflexionen an Wänden oder mittels Reflexionselementen zu diesem oder einem weiteren Ultraschallwandler (zurück) geführt wird. Beispielsweise aus der Laufzeit der Ultraschallwelle zwischen den Ultraschallwandlern beziehungsweise aus einem Laufzeitunterschied bei einer Vertauschung von Sender und Empfänger kann eine Durchflussgeschwindigkeit durch das Messrohr bestimmt werden. Weiter können zur Bestimmung der Fließgeschwindigkeit und weiterer Mediumsparameter auch ein Phasendifferenzverfahren oder ein Dopplerverfahren eingesetzt werden.

Man kennt hierzu etwa aus der DE 10 2014 010 375 A1 eine Ultraschallwandleranordnung mit einem taschenförmigen Gehäuse zur Montage der Ultraschallwandleranordnung in einem Durchgangsloch in einem Gehäuse eines Ultraschallwasserzählers in einer Montageebene, wobei sich in dem Gehäuse des Ultraschallwasserzählers eine Ultraschallmessstrecke befindet, entlang der eine Laufzeitmessung mittels der Ultraschallwandleranordnung durchführbar ist, einem im Gehäuse befindlichen Wandlerkörper zur Erzeugung und/oder zum Empfang eines akustischen Signals, einer dem Wandlerkörper zugeordneten Gehäusewand, durch die hindurch das akustische Signal verläuft.

Die DE 10 2012 108 254 A1 zeigt einen Ultraschall-Wandler, umfassend ein Gehäuse und ein Piezo-Element, wobei das Piezo-Element in einem Hohlraum des Gehäuses eingesetzt ist, wobei im Gehäuse ein Abdeckmittel angeordnet ist, welches den Hohlraum abdeckt und wobei zwischen dem Abdeckmittel und dem Piezo-Element ein Feder-Element angeordnet ist, welche das Piezo-Element mit einer Federkraft beaufschlagt, wobei dass das Abdeckmittel mehrere das Abdeckmittel durchkontaktierende Leiterbahnen aufweist.

Die DE 10 2018 009 754 A12 wiederum zeigt eine Messeinrichtung zur Ermittlung einer Fluidgröße mit einer Steuereinrichtung , einem Messrohr, das dazu dient, das Fluid aufzunehmen und/oder zu führen, und einem an dem Messrohr angeordneten, ersten Schwingungswandler, wobei der erste Schwingungswandler eine ortsfest bezüglich des Messrohrs angeordnete Haltevorrichtung und wenigstens zwei voneinander beabstandete Schwingelemente umfasst, wobei zwischen eine jeweilige von dem Messrohr abgewandte Seitenfläche der Schwingelemente und die Haltevorrichtung wenigstens ein oder wenigstens ein jeweiliges elastisch verformtes Federelement geklemmt ist, welches das jeweilige Schwingelement gegen das Messrohr oder ein zwischen dem Messrohr und dem jeweiligen Schwingelement angeordnetes Kopplungselement presst.

Außerdem ist aus der DE 10 2010 020 338 A1 eine Gehäuseanordnung für einen Ultraschall-Durchflussmesser mit einem ein- oder mehrteiligen Gehäuse bekannt, welches dazu vorgesehen ist, an eine Fluidleitung angeschlossen zu werden, mit einem Ultraschallwandler, welcher einen Teil umgebendes Gehäuse oder Abdeckung aufweist, mit einer in dem Gehäuse vorgesehenen Gehäuseöffnung, die dazu vorgesehen ist, den Ultraschallwandler an der Gehäuseanordnung zu positionieren, mit einem Dichtungselement, welches zwischen dem Gehäuse und dem Ultraschallwandler angeordnet ist, wobei in die Gehäuseöffnung ein Gehäuseeinsatz als Modul einsetzbar ist, der Gehäuseeinsatz dazu eingerichtet ist, mindestens zwei, voneinander getrennt positionierte Ultraschallwandlerkörper aufzunehmen, ohne dass der Ultraschallwandlerkörper mit dem Fluid in Berührung kommt.

US 2017/122786 A1 offenbart eine Ultrachallmessanordnung, wobei ein Ultraschallwandler mit seinem Wandlerkörper in Gebrauchsstellung in einer Aufnahme aufgenommen ist und benachbart zu einem dem Messrohr zugewandten stirnseitigen Wandabschnitt der Aufnahme angeordnet ist, wobei der wenigstens einen Aufnahme des Ultraschallwandlers ein Deckelteil zugeordnet ist, welches eingerichtet ist, die wenigstens eine Aufnahme zu verschließen.

Bei den vorbekannten Ultraschallmessanordnungen geschieht dabei die Sensorankopplung über eine Deckeleinrichtung, durch welche Kabel nach außen von der Anordnung weg geführt werden müssen, um die Messanordnung elektrisch zu kontaktieren. Eine Anpressung des Wandlers geschieht über eine Feder, die auch den elektrischen Kontakt zu einem Gegenkontakt im Deckel herstellt, wonach wiederum Anschlusskabel aus dem Deckel herausgeführt werden. Bei den bekannten Anordnungen besteht, selbst wenn der Gegenkontakt in einem Schraubdeckel vorgesehen ist, die Gefahr, dass die Kontakte verdreht werden oder die Anschlusskabel bei der Vorbereitung der Messanordnung abgerissen werden, so dass die Zuverlässigkeit des Messvorgangs an sich durch ungenügende elektrische Kontaktierung gefährdet ist und ggf. eine zeitintensive Fehlersuche nötig macht.

Es ist daher die Aufgabe der vorliegenden Erfindung, ein Ultraschallmessanordnung zur Verfügung zu stellen, die einen zuverlässige und haltbare Kontaktierung des Ultraschallwandlers an dem Messrohr gewährleistet und auf diese Weise Zeit und Kosten bei der Messung einspart.

Diese Aufgabe wird durch eine Vorrichtung mit den Merkmalen des Anspruchs 1 gelöst. Die erfindungsgemäße Lösung besteht also insbesondere darin, dass der wenigstens einen Aufnahme des Gehäuses ein Deckelteil zugeordnet ist, welches eingerichtet ist, die wenigstens eine Aufnahme zu verschließen und auf den in der betreffenden Aufnahme befindlichen Wandlerkörper eine Anpresskraft auszuüben, die diesen an den betreffenden Wandabschnitt drückt; wobei an der wenigstens einen Aufnahme zwischen dem Deckelteil und dem Wandlerkörper ein Übertragungsglied vorgesehen ist, welches die seitens des Deckelteils ausgeübte Anpresskraft zumindest teilweise an den Wandlerkörper überträgt und wobei die von dem Deckelteil und dem Übertragungsglied bei der Kraftübertragung jeweils ausgeführten translatorischen Bewegungen unterschiedliche Richtungsvektoren aufweisen.

Folglich ist die Ultraschallmessanordnung erfindungsgemäß mit einem Deckelteil versehen, das die wenigstens eine Aufnahme des Gehäuses, die in ihrem Aufnahmeraum den Wandlerkörper des Ultraschallwandlers aufnimmt, verschließt. Dabei übt sie gleichzeitig zumindest mittelbar auf den in der betreffenden Aufnahme befindlichen Wandlerkörper eine Anpresskraft aus, die diesen an den betreffenden Wandabschnitt drückt. Außerdem ist an der wenigstens einen Aufnahme zwischen dem Deckelteil und dem Wandlerkörper ein Übertragungsglied vorgesehen ist. Dieses überträgt die seitens des Deckelteils ausgeübte Anpresskraft zumindest teilweise an den Wandlerkörper. Dabei weisen die von dem Deckelteil und dem Übertragungsglied bei der Kraftübertragung jeweils ausgeführten translatorischen Bewegungen unterschiedliche Richtungsvektoren auf, die Bewegungen des Deckelteils und des Übertragungsglieds verlaufen demnach nicht parallel und können trotzdem den Wandlerkörper zuverlässig an seinen Wandabschnitt drücken und eine zuverlässige Kontaktierung gewährleisten.

Bevorzugte Weiterbildungen der erfindungsgemäßen Vorrichtung finden sich in den entsprechenden Unteransprüchen.

Um zu vermeiden, dass dem Wandlerkörper zugeführte Kabel / Leitungen unbeabsichtigt den Kontakt zu dem Wandlerkörper verlieren, kann bei einer vorteilhaften Ausführungsform der erfindungsgemäßen Ultraschallmessanordnung das Übertragungsglied gegenüber dem jeweils zugeordneten Wandlerkörper derart drehfest vorgesehen sein, dass bei gemeinsamer Bewegung eine winkeltreue Position bezüglich einer gemeinsamen Achse beibehalten wird.

Die zu übertragende Kraft kann an den Wandlerkörper in geeigneter Weise übermittelt werden, wenn bei einer weiteren Ausgestaltung der Ultraschallmessanordnung das Übertragungsglied gegenüber einer Seitenwand der wenigstens einen Aufnahme verschieblich führbar vorgesehen ist.

Eine bevorzugte Weiterbildung kann bei der erfindungsgemäßen Ultraschallmessanordnung darin bestehen, dass das Übertragungsglied wenigstens eine Seitenfläche aufweist, die in Gebrauchsstellung des Übertragungsglieds einem Abschnitt einer Seitenwand der wenigstens einen Aufnahme oder einem Wandabschnitt des Deckelteils benachbart gegenüberliegt, so dass die Seitenwand der Aufnahme eine Stütz- und Führungsfunktion übernehmen kann und das Übertragungsglied bei Beaufschlagung mit der betreffenden Kraft entlang der Seitenwand bspw. gleiten kann. Es sind aber auch andere Mittel zur Stützung und Führung des Übertragungsglieds denkbar.

Besonders bevorzugt kann bei einer Weiterbildung der Ultraschallmessanordnung das Übertragungsglied keilförmig ausgebildet sein, wodurch sich je eine Fläche des betreffenden Keils zumindest mittelbar an dem Wandlerkörper und an der Aufnahmeseitenwand abstützen kann. Beispielsweise kann der Keil dabei im Querschnitt ein rechtwinkliges Dreieck bilden, dessen Hypothenuse seitens des Deckelteils mit der in Rede stehenden Kraft beaufschlagt wird. Es ist aber auch eine andere Formgebung bei dem Keil bzw. dem Übertragungsglied im Allgemeinen denkbar.

Um das Deckelteil an der wenigstens einen Aufnahme in geeigneter Weise zuverlässig festlegen und die Aufnahme verschließen zu können, kann eine Drehbewegung nötig sein, weswegen in einer vorteilhaften Ausgestaltung der erfindungsgemäßen Ultraschallmessanordnung gegenüber dem Übertragungsglied drehbar oder drehbeweglich vorgesehen ist.

Eine Beschädigung des Wandlerkörpers bzw. seiner Leitungen kann bei Beaufschlagung mit der Kraft in vorteilhafter Weise durch eine Ausgestaltung der erfindungsgemäßen Ultraschallmessanordnung vermieden werden, bei der dem Übertragungsglied zumindest ein elastisches Element zugeordnet ist, welches zwischen dem Übertragungsglied und dem Wandlerkörper des Ultraschallwandlers anordenbar oder angeordnet ist. Hierdurch kann die den Wandlerkörper gegen die Gehäusewand drückende Kraft zum Beispiel besonders schonend, weil abgefedert, aufgebracht werden.

Besonders gut handhabbar und einfach herzustellen ist dabei eine Ausgestaltung der erfindungsgemäßen Ultraschallmessanordnung, bei der das zumindest eine elastische Element einen Bereich oder Abschnitt des Übertragungsglieds bildet oder einstückig mit diesem ausgebildet ist.

In einer bevorzugten Weiterbildung kann bei der erfindungsgemäßen Ultraschallmessanordnung das elastische Element aus einem nachgiebigen Material, insbesondere einem Schaumstoff oder einem Gummimaterial gebildet sei. Es sind aber auch andere Materialien für das elastische Element denkbar.

Um gegebenenfalls mittels der erfindungsgemäßen Ultraschallmessanordnung weiter Messparameter erfassen und weiterverarbeiten zu können, ist es in einer Ausführungsform vorgesehen, dass wenigstens eine Aufnahme vorgesehen und eingerichtet ist, in ihrem Aufnahmeraum wenigstens einen weiteren Sensor aufzunehmen. Hierdurch können zum Beispiel in einfacher Weise Umgebungsbedingungen des Ultraschallwandlers, beispielsweise die Temperatur, erfasst werden. Es sind aber auch andere Parameter oder Variablen zur Erfassung denkbar.

Die erfindungsgemäße Ultraschallmessanordnung wird in einer Weiterbildung durch Einsparung zusätzlicher Teile weiter vereinfacht, in der der weitere Sensor durch das Übertragungsglied zumindest mittelbar ortsfest gehalten ist. Bei gegebenenfalls anderer Ausbildung des Aufnahmeraums kann sich der weitere Sensor bspw. mittelbar an einer Seitenfläche des Übertragungsglieds abstützen.

Bevorzugt kann bei einer Weiterbildung der Ultraschallmessanordnung zwischen dem Übertragungsglied und dem wenigstens einen weiteren Sensor ein wenigstens ein weiteres elastisches Element derart angeordnet ist, dass auch in diesem Fall die Kraft zur ortsfesten Positionierung des zweiten Sensors schonend übertragen wird. Es sind auch andere Anordnungen von Übertragungsglied, zweitem Sensor und weiterem elastischem Element vorstellbar.

Bei einer Ausführungsform der erfindungsgemäßen Ultraschallmessanordnung, die eine ausgezeichnete Ausnutzung der eingekoppelten Schallenergie zeigt, kann zwischen dem Ultraschallwandler und dem stirnseitigen Wandschnitt der wenigstens einen Aufnahme ein Koppelmedium angeordnet sein, das eine besonders gute Vermittlung des Schalls an den Wandabschnitt gewährleistet.

Ebenfalls gut handhabbar ist eine Ausführungsform der erfindungsgemäßen Ultraschallmessanordnung, bei der die Aufnahme zum Aufnehmen des Wandlerkörpers des Ultraschallwandlers gut zugänglich ist. Hierfür kann vorteilhafterweise das Deckelteil mit der Aufnahme lösbar verbindbar vorgesehen sein. Beispielsweise kann hierbei das Deckelteil verliersicher mit dem Gehäuse verbunden sein, bspw. Über ein Verbindungsmittel, so dass es stets einsatzbereit zur Verfügung steht.

Bevorzugt kann hierbei das Deckelteil an der Aufnahme verschraubbar oder verrastbar vorgesehen sein. Es sind aber auch andere Verbindungsmethoden zwischen den beiden denkbar.

Zur platzsparenden und gut anzuordnenden Unterbringung der Ultraschallmessanordnung kann eine Außenfläche des Deckelteils mit einer Außenwand des Gehäuses in Gebrauchsstellung fluchten. Hierdurch kann eine einheitliche Fläche gebildet sein, die keine Kanten oder Vorsprünge bildet, die beim Anordnen des Gehäuses am Strömungsweg Probleme bereiten könnten.

Die obigen Ausgestaltungen und Weiterbildungen lassen sich, sofern zweckmäßig, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

Die beigefügte Figuren soll ein weiteres Verständnis der Ausführungsformen der Erfindung vermitteln. Sie veranschaulicht eine Ausführungsform und dient im Zusammenhang mit der Beschreibung der Erklärung von Prinzipien und Konzepten der Erfindung. Andere Ausführungsformen und viele der genannten Vorteile ergeben sich im Hinblick auf die Zeichnungsfiguren. Die Elemente der Zeichnungsfigur sind nicht notwendigerweise maßstabsgetreu zueinander gezeigt.

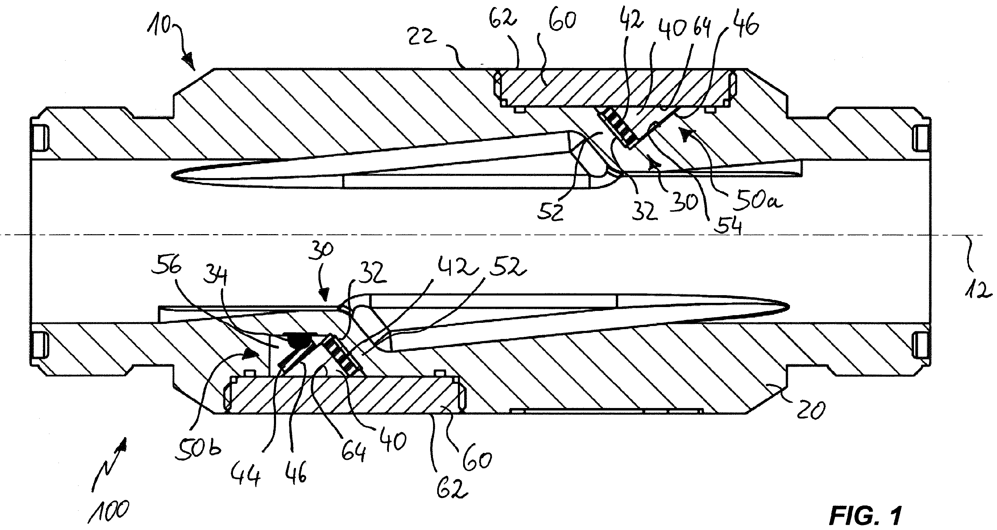

Die Erfindung wird nachstehend anhand von Ausführungsbeispielen in der Figur der Zeichnung näher erläutert. In teilweise schematisierter Darstellung zeigt hierbei die einzige Zeichnungsfigur FIG. 1 eine im Ganzen mit 100 bezeichnete Ultraschallmessanordnung zur Durchflussmessung an einem in einem Messrohr 10 strömenden Medium, wobei das Messrohr 10 in einem Gehäuse 20 angeordnet ist.

An dem Messrohr 10 sind zwei Ultraschallwandler 30 angeordnet, mittels deren Schallenergie in eine Richtung in das in dem Messrohr 10 strömende Medium einkoppelbar ist, diese Richtung schließt jeweils mit einer Längsachse des Messrohrs einen Winkel ein. Die Ultraschallwandler 30 sind mit ihren Wandlerkörpern 32 in Gebrauchsstellung jeweils in einer Aufnahme 50 des Gehäuses 20 aufgenommen ist und benachbart zu einem dem Messrohr 10 zugewandten stirnseitigen Wandabschnitt 52 der jeweiligen Aufnahme 50 angeordnet.

Den Aufnahmen 50 des Gehäuses 20 ist jeweils ein Deckelteil 60 zugeordnet, welches eingerichtet ist, die Aufnahme 50 zu verschließen und auf den in der betreffenden Aufnahme 50 befindlichen Wandlerkörper 32 eine Anpresskraft auszuüben, die diesen an den betreffenden, zugeordneten Wandabschnitt 52 drückt. An jeder Aufnahme 50 ist zwischen dem Deckelteil 60 und dem Wandlerkörper 32 ein Übertragungsglied 40 vorgesehen, welches die seitens des Deckelteils 60 ausgeübte Anpresskraft zumindest teilweise an den Wandlerkörper 32 überträgt. Dabei weisen erfindungsgemäß die von dem Deckelteil 60 und dem Übertragungsglied 40 bei der Kraftübertragung jeweils ausgeführten translatorischen Bewegungen unterschiedliche Richtungsvektoren auf.

In der FIG. 1 ist eine quergeschnittene Ansicht des Messrohrs 10 der Ultraschallmessanordnung 100 mit dem Gehäuse 20 zu erkennen. An dem Gehäuse 20 sind zwei Aufnahmen 50a, 50b gezeigt, deren Aufnahmeraum 56 jeweils unterschiedlich ausgebildet ist. Die Aufnahmen 50a, 50b liegen einander an dem Gehäuse 20 entlang des Messrohrs 10 derart gegenüber, dass die jeweiligen stirnseitigen Wandabschnitte 52 einander zugewandt sind, wodurch Schallenergie in einer Richtung in das in dem Messrohr 10 strömende Medium einkoppelbar ist, die mit einer Längsachse 12 des Messrohrs 10 einen Winkel einschließt.

In den Aufnahmen 50a, 50b sind die Übertragungsglieder 40 gegenüber dem jeweiligen Wandlerkörper 32 drehfest ausgebildet. Während dabei in der Aufnahme 50a das dortige Übertragungsglied gegenüber einer Seitenwand 54 der Aufnahme 50a verschieblich führbar vorgesehen ist, stützt sich das Übertragungsglied 40 in der Aufnahme 50b an einem dortigen weiteren elastischen Element 44 ab, das hierdurch wiederum den als Temperatursensor ausgebildeten weiteren Sensor 34 ortsfest hält. In beiden Aufnahmen 50a, 50b übt das jeweilige Deckelteil 60 eine Anpresskraft auf das dortige Übertragungsglied 40 aus. Diese wird durch die Verbindung des Deckelteils 60 mit der jeweiligen Aufnahme 50a, 50b gewissermaßen erzeugt, wobei der Richtungsvektor der translatorischen Bewegung des Deckelteils 60 quer zur Längsachse des Messrohrs weist. Demgegenüber weist der Richtungsvektor der translatorischen Bewegung des Übertragungsglieds in der FIG. 1 jeweils in Richtung des in der Aufnahme 50a, 50b befindlichen, Wandlerkörpers gegenüberliegenden Aufnahme 50a, 50b, die sich von der Richtung der Deckelbewegung unterscheidet.

Weiter erkennt man, dass in der Aufnahme 50a des Gehäuses 20 das Übertragungsglied 40 wenigstens eine Seitenfläche 46 aufweist, die in Gebrauchsstellung des Übertragungsglieds 40 einem Abschnitt einer Seitenwand 54 der Aufnahme 50. In der Aufnahme 50b liegt das Übertragungsglied 40 wie in der Aufnahme 50a einem Wandabschnitt 64 des Deckelteils 60 benachbart gegenüber. In beiden Fällen ist das Übertragungsglied 40 keilförmig ausgebildet.

In den Aufnahmen 50a, 50b werden die Wandlerkörper 32 des jeweiligen Ultraschallwandlers 30 durch das Übertragungsglied 40 an einen stirnseitigen Wandabschnitt 52 der jeweiligen Aufnahme gedrückt. Zwischen Wandabschnitt 52 und Wandlerkörper 32 ist dabei jeweils ein in der Zeichnungsfigur 1 nicht dargestelltes Koppelmedium vorgesehen.

In jeder der Aufnahmen 50a, 50b ist dem Übertragungsglied 40 zumindest ein elastisches Element 42 zugeordnet, welches zwischen dem Übertragungsglied 40 und dem Wandlerkörper 32 des Ultraschallwandlers 30 angeordnet ist und die Anpresskraft vermittelt. Das elastische Element 42 bildet dabei jeweils einen Abschnitt des Übertragungsglieds 40 und ist einstückig mit diesem ausgebildet, außerdem ist es aus einem nachgiebigen Material in Form eines Gummimaterials ausgebildet.

Nur im Falle der Aufnahme 50b erkennt man, dass diese vorgesehen und eingerichtet ist, in ihrem Aufnahmeraum 56 wenigstens einen weiteren Sensor 34, hier einen Temperatursensor, aufzunehmen, der sich an einem Wandabschnitt der Aufnahme 50b befindet, der in etwa parallel zur Längsachse 12 des Messrohres 10 verläuft. Dabei ist der weitere Sensor 34 durch das Übertragungsglied 40 insoweit mittelbar ortsfest gehalten, als zwischen dem Übertragungsglied 40 und dem wenigstens einen weiteren Sensor 34 ein weiteres elastisches Element 44 angeordnet ist. Das weitere elastische Element 44 kontaktiert dabei die Seitenfläche 46 des betreffenden Übertragungsglieds 40 in der Aufnahme 50b.

Das Deckelteil 60 ist mit der jeweiligen Aufnahme 50a, 50b lösbar verbindbar und im vorliegenden Fall durch ein nicht weiter dargestelltes Rastmittel verrastet. Eine Außenfläche 62 des Deckelteils 60 fluchtet dabei mit einer Außenwand 22 des Gehäuses 20 in Gebrauchsstellung.

### Bezugszeichenliste

- 10: Messrohr
- 12: Längsachse Messrohr
- 20: Gehäuse
- 22: Außenwand von Gehäuse
- 30: Ultraschallwandler
- 32: Wandlerkörper
- 34: weiterer Sensor
- 40: Übertragungsglied
- 42: elastisches Element
- 44: weiteres elastisches Element
- 46: Seitenfläche Übertragungsglied
- 50a, 50b: Aufnahme
- 52: Wandabschnitt
- 54: Seitenwand
- 56: Aufnahmeraum
- 60: Deckelteil
- 62: Außenfläche Deckelteil
- 64: Wandabschnitt Deckelteil
- 100: Ultraschallmessanordnung

## Patentansprüche

1. Ultraschallmessanordnung (100) zur Durchflussmessung an einem in einem Messrohr (10) strömenden Medium, welches Messrohr (10) in einem Gehäuse (20) angeordnet ist,
wobei an dem Messrohr (10) wenigstens ein Ultraschallwandler (30) angeordnet ist, mittels dessen Schallenergie in einer Richtung in das in dem Messrohr (10) strömende Medium einkoppelbar und aus dem Messrohr (10) ausgekoppelte Schallenergie erfassbar ist, die mit einer Längsachse (12) des Messrohrs (10) einen Winkel einschließt,
wobei wenigstens ein Ultraschallwandler (30) mit seinem Wandlerkörper (32) in Gebrauchsstellung in wenigstens einer Aufnahme (50a, 50b) des Gehäuses (20) aufgenommen ist und benachbart zu einem dem Messrohr (10) zugewandten stirnseitigen Wandabschnitt (52) der Aufnahme (50a, 50b) angeordnet ist,
wobei der wenigstens einen Aufnahme (50a, 50b) des Gehäuses (20) ein Deckelteil (60) zugeordnet ist, welches eingerichtet ist, die wenigstens eine Aufnahme (50a, 50b) zu verschließen und auf den in der betreffenden Aufnahme (50a, 50b) befindlichen Wandlerkörper (32) eine Anpresskraft auszuüben, die diesen an den betreffenden Wandabschnitt (52) drückt;
wobei an der wenigstens einen Aufnahme (50a, 50b) zwischen dem Deckelteil (60) und dem Wandlerkörper (32) ein Übertragungsglied (40) vorgesehen ist, welches die seitens des Deckelteils (60) ausgeübte Anpresskraft zumindest teilweise an den Wandlerkörper (32) überträgt und
wobei die von dem Deckelteil (60) und dem Übertragungsglied (40) bei der Kraftübertragung jeweils ausgeführten translatorischen Bewegungen unterschiedliche Richtungsvektoren aufweisen.

2. Ultraschallmessanordnung nach Anspruch 1, wobei das Übertragungsglied (40) gegenüber dem jeweils zugeordneten Wandlerkörper (32) drehfest vorgesehen ist.

3. Ultraschallmessanordnung nach Anspruch 1 oder 2, wobei das Übertragungsglied (40) gegenüber einer Seitenwand (54) der wenigstens einen Aufnahme (50a, 50b) verschieblich führbar vorgesehen ist.

4. Ultraschallmessanordnung nach einem der vorhergehenden Ansprüche, wobei das Übertragungsglied (40) wenigstens eine Seitenfläche (46) aufweist, die in Gebrauchsstellung des Übertragungsglieds (40) einem Abschnitt einer Seitenwand (54) der wenigstens einen Aufnahme (50a, 50b) oder einem Wandabschnitt (64) des Deckelteils (60) benachbart gegenüberliegt.

5. Ultraschallmessanordnung nach einem der vorhergehenden Ansprüche, wobei das Übertragungsglied (40) keilförmig ausgebildet ist.

6. Ultraschallmessanordnung nach einem der vorhergehenden Ansprüche, wobei das Deckelteil (60) gegenüber dem Übertragungsglied (40) drehbeweglich vorgesehen ist.

7. Ultraschallmessanordnung nach einem der vorhergehenden Ansprüche, wobei dem Übertragungsglied (40) zumindest ein elastisches Element (42) zugeordnet ist, welches zwischen dem Übertragungsglied (40) und dem Wandlerkörper (32) des Ultraschallwandlers (30) anordenbar oder angeordnet ist.

8. Ultraschallmessanordnung nach Anspruch 7, wobei das zumindest eine elastische Element (42) einen Bereich oder Abschnitt des Übertragungsglieds (40) bildet oder einstückig mit diesem ausgebildet.

9. Ultraschallmessanordnung nach Anspruch 7 oder 8, wobei das elastische Element (42) aus einem nachgiebigen Material, insbesondere einem Schaumstoff oder einem Gummimaterial gebildet ist.

10. Ultraschallmessanordnung nach einem der vorhergehenden Ansprüche, wobei wenigstens eine Aufnahme (50b) vorgesehen und eingerichtet ist, in ihrem Aufnahmeraum (56) wenigstens einen weiteren Sensor (34) aufzunehmen.

11. Ultraschallmessanordnung nach Anspruch 10, wobei der weitere Sensor (34) durch das Übertragungsglied (40) zumindest mittelbar ortsfest gehalten ist.

12. Ultraschallmessanordnung nach Anspruch 11, wobei zwischen dem Übertragungsglied (40) und dem wenigstens einen weiteren Sensor (34) ein wenigstens ein weiteres elastisches Element angeordnet ist

13. Ultraschallmessanordnung nach einem der vorhergehenden Ansprüche, wobei zwischen dem Ultraschallwandler (30) und dem stirnseitigen Wandschnitt (52) der wenigstens einen Aufnahme (50a, 50b) ein Koppelmedium (58) angeordnet ist.

14. Ultraschallmessanordnung nach einem der vorhergehenden Ansprüche, wobei das Deckelteil mit der wenigstens einen Aufnahme (50a, 50b) lösbar verbindbar ist,
insbesondere an der wenigstens einen Aufnahme (50a, 50b) verschraubbar oder verrastbar vorgesehen ist.

15. Ultraschallmessanordnung nach einem der vorhergehenden Ansprüche, wobei eine Außenfläche (62) des Deckelteils (60) mit einer Außenwand (22) des Gehäuses (20) in Gebrauchsstellung fluchtet.

## Claims

1. Ultrasonic measuring arrangement (100) for measuring the flow of a medium flowing in a measuring tube (10), which measuring tube (10) is arranged in a housing (20),
wherein at least one ultrasonic transducer (30) is arranged on the measuring tube (10), by means of which sound energy can be coupled in a direction into the medium flowing in the measuring tube (10) and sound energy coupled out of the measuring tube (10) can be detected, which creates an angle with a longitudinal axis (12) of the measuring tube (10),
wherein at least ultrasonic transducer (30) is accommodated with its transducer body (32) in the use position in at least one receptacle (50a, 50b) of the housing (20) and is arranged adjacent to an end-face wall section (52) of the receptacle (50a, 50b) facing the measuring tube (10),
wherein the at least one receptacle (50a, 50b) of the housing (20) is associated with a cover part (60), which is designed to close the at least one receptacle (50a, 50b) and to exert a contact pressure on the transducer body (32) located in the receptacle (50a, 50b) in question, which presses it against the wall section (52) in question;
wherein a transmission member (40) is provided on the at least one receptacle (50a, 50b) between the cover part (60) and the transducer body (32) and transmits the contact pressure exerted by the cover part (60) at least partly to the transducer body (32) and
wherein the translational movements respectively carried out by the cover part (60) and the transmission member (40) during force transmission have different direction vectors.

2. Ultrasonic measuring arrangement according to claim 1, wherein the transmission member (40) is provided so as to be rotationally fixed with respect to the respectively associated transducer body (32).

3. Ultrasonic measuring arrangement according to claim 1 or 2, wherein the transmission member (40) is provided so as to be displaceably guided with respect to a side wall (54) of the at least one receptacle (50a, 50b).

4. Ultrasonic measuring arrangement according to one of the preceding claims, wherein the transmission member (40) has at least one side surface (46), which lies opposite and adjacent to a section of a side wall (54) of the at least one receptacle (50a, 50b) or a wall section (64) of the cover part (60) in the use position of the transmission member (40).

5. Ultrasonic measuring arrangement according to one of the preceding claims, wherein the transmission member (40) is wedge-shaped.

6. Ultrasonic measuring arrangement according to one of the preceding claims, wherein the cover part (60) is provided to be rotatable with respect to the transmission member (40) .

7. Ultrasonic measuring arrangement according to one of the preceding claims, wherein the transmission member (40) is associated with at least one elastic element (42), which can be arranged or is arranged between the transmission member (40) and the transducer body (32) of the ultrasonic transducer (30).

8. Ultrasonic measuring arrangement according to claim 7, wherein the at least one elastic element (42) forms a region or section of the transmission member (40) or is formed integrally therewith.

9. Ultrasonic measuring arrangement according to claim 7 or 8, wherein the elastic element (42) is formed from a resilient material, in particular a foam or a rubber material.

10. Ultrasonic measuring arrangement according to one of the preceding claims, wherein at least one receptacle (50b) is provided and designed to receive at least one further sensor (34) in its receiving space (56).

11. Ultrasonic measuring arrangement according to claim 10, wherein the further sensor (34) is held stationary at least indirectly by the transmission member (40).

12. Ultrasonic measuring arrangement according to claim 11, wherein an at least one further elastic element is arranged between the transmission member (40) and the at least one further sensor (34).

13. Ultrasonic measuring arrangement according to one of the preceding claims, wherein a coupling medium (58) is arranged between the ultrasonic transducer (30) and the end-face wall section (52) of the at least one receptacle (50a, 50b).

14. Ultrasonic measuring arrangement according to one of the preceding claims, wherein the cover part can be releasably connected to the at least one receptacle (50a, 50b), in particular is provided so as to be screwed or latched to the at least one receptacle (50a, 50b).

15. Ultrasonic measuring arrangement according to one of the preceding claims, wherein an outer surface (62) of the cover part (60) is flush with an outer wall (22) of the housing (20) in the use position.

## Revendications

1. Système de mesure par ultrasons (100) pour la mesure d'un débit sur un milieu s'écoulant dans un tube de mesure (10), lequel tube de mesure (10) est disposé dans un boîtier (20) ,
dans lequel au moins un transducteur à ultrasons (30) est disposé sur le tube de mesure (10), au moyen duquel l'énergie acoustique peut être couplée dans une direction dans le milieu s'écoulant dans le tube de mesure (10) et l'énergie acoustique couplée hors du tube de mesure (10) peut être détectée, qui forme un angle avec un axe longitudinal (12) du tube de mesure (10),
dans lequel, en position d'utilisation, au moins un transducteur à ultrasons (30) est logé avec son corps de transducteur (32) dans au moins un logement (50a, 50b) du boîtier (20) et est disposé adjacent à une partie de paroi d'extrémité (52) du logement (50a, 50b) en face du tube de mesure (10),
dans lequel ledit au moins un logement (50a, 50b) du boîtier (20) est associé à une partie de couvercle (60) qui est configurée pour fermer ledit au moins un logement (50a, 50b) et pour appliquer une force de pression sur le corps de transducteur (32) situé dans le logement (50a, 50b) concerné, qui presse celui-ci contre la partie de paroi (52) concernée ;
dans lequel un élément de transmission (40) est prévu sur ledit au moins un logement (50a, 50b) entre la partie de couvercle (60) et le corps de transducteur (32) et transmet au moins partiellement au corps de transducteur (32) la force de pression appliquée par la partie de couvercle (60), et
dans lequel les mouvements de translation respectivement réalisés par la partie de couvercle (60) et l'élément de transmission (40) lors de la transmission de force ont des vecteurs directionnels différents.

2. Système de mesure par ultrasons selon la revendication 1, dans lequel l'élément de transmission (40) est prévu pour être solidaire en rotation par rapport au corps de transducteur (32) respectivement associé.

3. Système de mesure par ultrasons selon la revendication 1 ou 2, dans lequel l'élément de transmission (40) est prévu pour pouvoir être guidé en déplacement par rapport à une paroi latérale (54) dudit au moins un logement (50a, 50b).

4. Système de mesure par ultrasons selon l'une des revendications précédentes, dans lequel l'élément de transmission (40) comporte au moins une surface latérale (46) qui, en position d'utilisation de l'élément de transmission (40), est opposée et adjacente à une partie d'une paroi latérale (54) dudit au moins un logement (50a, 50b) ou à une partie de paroi (64) de la partie de couvercle (60).

5. Système de mesure par ultrasons selon l'une des revendications précédentes, dans lequel l'élément de transmission (40) est réalisé en forme de coin.

6. Système de mesure par ultrasons selon l'une des revendications précédentes, dans lequel la partie de couvercle (60) est prévue rotative par rapport à l'élément de transmission (40).

7. Système de mesure par ultrasons selon l'une des revendications précédentes, dans lequel au moins un élément élastique (42) est associé à l'élément de transmission (40) et peut être disposé ou est disposé entre l'élément de transmission (40) et le corps de transducteur (32) du transducteur à ultrasons (30).

8. Système de mesure par ultrasons selon la revendication 7, dans lequel ledit au moins un élément élastique (42) forme une zone ou une partie de l'élément de transmission (40), ou est formé d'un seul tenant avec celui-ci.

9. Système de mesure par ultrasons selon la revendication 7 ou 8, dans lequel l'élément élastique (42) est formé d'un matériau souple, en particulier d'une mousse ou d'un caoutchouc.

10. Système de mesure par ultrasons selon l'une des revendications précédentes, dans lequel au moins un logement (50b) est prévu et configuré pour loger au moins un capteur supplémentaire (34) dans son espace de logement (56) .

11. Système de mesure par ultrasons selon la revendication 10, dans lequel le capteur supplémentaire (34) est maintenu fixe au moins indirectement par l'élément de transmission (40) .

12. Système de mesure par ultrasons selon la revendication 11, dans lequel au moins un élément élastique supplémentaire est disposé entre l'élément de transmission (40) et ledit au moins un capteur supplémentaire (34).

13. Système de mesure par ultrasons selon l'une des revendications précédentes, dans lequel un milieu de couplage (52) est disposé entre le transducteur à ultrasons (30) et la partie de paroi d'extrémité (52) dudit au moins un logement (50a, 50b).

14. Système de mesure par ultrasons selon l'une des revendications précédentes, dans lequel la partie de couvercle peut être reliée audit au moins un logement (50a, 50b) de façon détachable et est en particulier prévue pour pouvoir être vissée ou enclenchée sur ledit au moins un logement (50a, 50b).

15. Système de mesure par ultrasons selon l'une des revendications précédentes, dans lequel, en position d'utilisation, une surface extérieure (62) de la partie de couvercle (60) est affleurante à une paroi extérieure (22) du boîtier (20).
